(19) Europäisches Patentamt / European Patent Office / Office européen des brevets

(11) **EP 2 677 645 B1**

(12) **FASCICULE DE BREVET EUROPEEN**

(45) Date de publication et mention
de la délivrance du brevet:
**06.09.2017  Bulletin 2017/36**

(51) Int Cl.:
*H02M 1/12* (2006.01)          *H02M 5/42* (2006.01)
*H02P 6/28* (2016.01)

(21) Numéro de dépôt: **13171979.1**

(22) Date de dépôt: **14.06.2013**

(54) **Système d'alimentation d'une charge, comprenant un convertisseur connecté à un réseau et un transformateur connecté en parallèle du convertisseur pour limiter le courant homopolaire, et chaîne d'entraînement comportant un tel système**

Ladungseinspeisungssystem, das einen mit einem Netz verbundenen Stromrichter umfasst sowie einen parallel zum Stromrichter geschalteten Transformator, um den Nullstrom zu begrenzen, und Antriebskette, die ein solches System umfasst

System for powering a load, comprising a converter connected to a network and a transformer connected in parallel to the converter to limit the zero sequence current, and drive chain comprising such a system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2012  FR 1255734**

(43) Date de publication de la demande:
**25.12.2013  Bulletin 2013/52**

(73) Titulaire: **GE Energy Power Conversion Technology Ltd
Rugby
Warwickshire CV21 1BU (GB)**

(72) Inventeur: **Permuy, Alfred
92500 Rueil Malmaison (FR)**

(74) Mandataire: **Serjeants LLP
Dock
75 Exploration Drive
Leicester, LE4 5NU (GB)**

(56) Documents cités:
WO-A1-2009/013996        CN-A- 102 447 403
FR-A1- 2 963 509          JP-A- 2009 225 583

**Description**

La présente invention concerne un système d'alimentation électrique d'une charge, le système d'alimentation étant propre à délivrer une tension de sortie à la charge, à partir d'une tension d'entrée issue d'un réseau électrique, le système d'alimentation comprenant :

- au moins deux bornes d'entrée et au moins deux bornes de sortie, les bornes d'entrée étant destinées à être connectées au réseau électrique et les bornes de sortie étant destinées à être connectées à la charge,
- un convertisseur propre à convertir la tension d'entrée en la tension de sortie, le convertisseur étant connecté entre les bornes d'entrée et les bornes de sortie, et
- un dispositif de limitation du courant homopolaire propre à circuler entre le réseau et la charge.

L'invention concerne également une chaîne d'entraînement propre à être reliée à un réseau électrique, comprenant une machine électrique et un tel système d'alimentation de la machine électrique.

L'invention s'applique à des systèmes d'alimentation destinés à être connectés à un réseau alternatif ou bien à un réseau continu. L'invention s'applique à des systèmes d'alimentation propre à délivrer à la charge une tension alternative ou une tension continue.

On connait du document FR 2 963 509 A1, un système d'alimentation du type précité. Le système d'alimentation comporte un redresseur triphasé connecté à un réseau d'alimentation triphasé et un onduleur triphasé connecté en sortie du redresseur, l'onduleur étant propre à délivrer une tension triphasée à une charge. Le redresseur et l'onduleur sont reliés entre eux par l'intermédiaire d'un bus continu, et le système comporte en outre un dispositif de limitation du courant homopolaire propre à circuler entre le réseau et la charge.

Le redresseur comporte des interrupteurs électroniques commandables propre à convertir le courant alternatif triphasé fourni par le réseau en un courant continu délivré en sortie du redresseur, les interrupteurs étant pilotés par un dispositif de commande propre à leur envoyer des signaux de commande auxdits interrupteurs. Le dispositif de commande est propre à limiter la valeur absolue de la tension homopolaire à une valeur inférieure ou égale à un sixième de celle de la tension du bus continu.

Toutefois, un tel système d'alimentation est nécessairement connecté à un réseau alternatif, et le courant homopolaire, bien que limité, présente parfois une valeur relativement importante.

Le but de l'invention est donc de proposer un système d'alimentation permettant de limiter davantage le courant homopolaire propre à être injecté dans le réseau.

CN 102447403 décrit un système d'alimentation comprenant une alimentation en courant alternatif et une liaison à courant continu. Un redresseur triphasé KM1 est connecté entre l'alimentation en courant alternatif et la liaison à courant continu. Un transformateur élévateur de tension T1 comporte un enroulement primaire connecté aux phases d'alimentation alternative par les commutateurs M1, M2 and M3. Un enroulement secondaire du transformateur T1 est relié à la liaison à courant continu par un redresseur monophasé KM2.

L'invention a pour objet un système d'alimentation du type précité, dans lequel le dispositif de limitation du courant homopolaire comporte un transformateur connecté en parallèle du convertisseur, entre les bornes d'entrée et les bornes de sortie, le transformateur comportant une première et une deuxième bobines électromagnétiques.

Suivant d'autres aspects avantageux de l'invention, le système d'alimentation comprend une ou plusieurs des caractéristiques suivants, prises isolément ou selon toutes les combinaisons techniquement possibles :

- la première bobine électromagnétique est connectée entre les bornes de sortie et une masse électrique, et la deuxième bobine électromagnétique est connectée entre les bornes d'entrée et la masse électrique, la première et la deuxième bobines présentant un même sens d'enroulement entre les bornes respectives et la masse électrique ;
- le dispositif de limitation comporte en outre au moins un premier élément passif, le ou chaque premier élément passif étant connecté entre le transformateur et une borne de sortie correspondante ;
- le dispositif de limitation comporte en outre au moins un deuxième élément passif, le ou chaque deuxième élément passif étant connecté entre le transformateur et une borne d'entrée correspondante ;
- le réseau électrique est un réseau alternatif, et le convertisseur est destiné à être relié au réseau alternatif sans présence d'un transformateur entre le réseau alternatif et ledit convertisseur ;
- le convertisseur est un convertisseur alternatif-alternatif destiné à être relié à un réseau alternatif, le convertisseur alternatif-alternatif étant propre à convertir une tension alternative d'entrée, issue du réseau alternatif, en une tension alternative de sortie ; et
- le convertisseur alternatif-alternatif comporte un redresseur de tension propre à être connecté au réseau alternatif et un onduleur de tension connecté en sortie du redresseur de tension.

L'invention a également pour objet une chaîne d'entraînement propre à être reliée à un réseau électrique, la chaîne d'entraînement comprenant une charge, telle qu'une machine électrique, et un système d'alimentation de la machine électrique, dans laquelle le système d'alimentation est tel que défini ci-dessus.

Suivant d'autres aspects avantageux de l'invention, la chaîne d'entraînement comprend une ou plusieurs des caractéristiques suivants, prises isolément ou selon toutes les combinaisons techniquement possibles :

- le transformateur présente un rapport de transformation entre la deuxième bobine électromagnétique et la première bobine électromagnétique, le ou chaque premier élément passif présente une première impédance, le ou chaque deuxième élément passif présente une deuxième impédance, et les première et deuxième impédances vérifient l'équation suivante :

$$Z1 + K^2 \times Z2 = (K-1) \times Z_L$$

où Z1 et Z2 représentent respectivement les première et deuxième impédances, K représente le rapport de transformation, et
$Z_L$ représente l'impédance de la charge vis-à-vis d'une masse électrique ;

- le rapport de transformation du transformateur vérifie l'égalité suivante :

$$K = 1 + \sqrt{2} \ ;$$

et
- la valeur de la première impédance est égale à la valeur de la deuxième impédance, la valeur des première et deuxième impédances étant de préférence définie à l'aide de l'égalité suivante :

$$Z1 = Z2 = \frac{1}{2 \times (1 + \sqrt{2})} \times Z_L \ ;$$

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est un schéma électrique d'une chaîne d'entraînement selon l'invention, et
- la figure 2 est une vue analogue à celle de la figure 1 selon un deuxième mode de réalisation de l'invention.

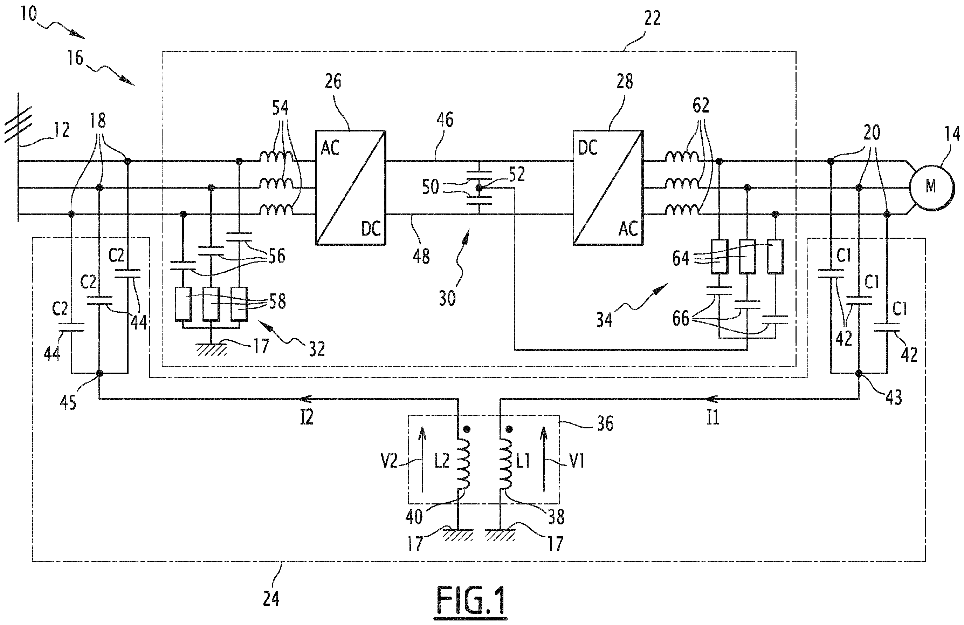

Sur la figure 1, une chaîne d'entraînement 10, reliée à un réseau électrique 12, comprend une charge 14 et un système 16 d'alimentation de la charge en courant électrique.

Le réseau électrique 12 est, par exemple, un réseau électrique alternatif. Dans l'exemple de réalisation de la figure 1, le réseau 12 est un réseau triphasé. En variante, le réseau électrique 12 est un réseau électrique continu.

La charge 14 présente une impédance $Z_L$ vis-à-vis d'une masse électrique 17, telle qu'une capacité $C_L$. Dans l'exemple de réalisation de la figure 1, la charge 14 comporte une machine électrique, telle qu'un moteur électrique triphasé. Le moteur électrique 14 est, par exemple, un moteur synchrone. En variante, le moteur 14 est un moteur asynchrone.

Le système d'alimentation 16 est propre à délivrer une tension de sortie à la charge 14 à partir d'une tension d'entrée issue du réseau électrique 12.

Le système d'alimentation 16 comprend des bornes d'entrée 18, des bornes de sortie 20, un convertisseur 22 connecté entre les bornes d'entrée 18 et les bornes de sortie 20 et propre à convertir la tension d'entrée en la tension de sortie, et un dispositif 24 de limitation du courant homopolaire propre à circuler entre le réseau 12 et la charge 14.

Lorsque la tension d'entrée et/ou de sortie est une tension polyphasée comportant P phase(s), le système d'alimentation comprend une borne d'entrée 18 pour chaque phase et/ou une borne de sortie 20 pour chaque phase. En variante, lorsque la tension d'entrée et/ou la tension de sortie est une tension continue, le système d'alimentation 16 comprend deux bornes d'entrée 18 et/ou deux bornes de sortie 20.

Les bornes d'entrée 18 sont destinées à être connectées au réseau électrique 12, et les bornes de sortie 20 sont destinées à être connectées à la charge 14.

Le convertisseur 22 est destiné à être relié au réseau électrique 12 sans présence d'un transformateur entre le réseau électrique 12 et ledit convertisseur 22 (de l'anglais *Transformerless Converter*), lorsque le réseau électrique 12 est un réseau alternatif.

Dans l'exemple de réalisation de la figure 1, le convertisseur 22 est un convertisseur alternatif-alternatif propre à convertir la tension alternative d'entrée issue du réseau alternatif 12 en la tension alternative de sortie.

Le convertisseur alternatif-alternatif 22 comporte un redresseur de tension 26 propre à être connecté au réseau alternatif 12 et un onduleur de tension 28 connecté en sortie du redresseur de tension 26 via un bus continu 30.

En complément, le convertisseur alternatif-alternatif 22 comporte un filtre d'entrée 32, tel qu'un filtre sinus, connecté entre le réseau 12 et le redresseur de tension 26, et un filtre de sortie 34, tel qu'un filtre dV/dT, connecté entre l'onduleur de tension 28 et les bornes de sortie 20.

Le dispositif de limitation du courant homopolaire 24 comporte un transformateur 36 connecté en parallèle du convertisseur 22, entre les bornes d'entrée 18 et les bornes de sortie 20, le transformateur 36 comportant une première 38 et une deuxième 40 bobines électromagnétiques.

En complément, le dispositif de limitation 24 comporte au moins un premier élément passif 42, le ou chaque premier élément passif 42 étant connecté entre le transformateur 36 et une borne de sortie 20 correspondante.

Dans l'exemple de réalisation de la figure 1, la tension de sortie est une tension triphasée, le système d'alimentation 16 comporte trois bornes de sortie 20, et le dispositif de limitation 24 comporte alors trois premiers éléments passifs 42. Les trois premiers éléments passifs 42 sont, d'une part, connectés à une borne de sortie 20 correspondante, et d'autre part, reliés entre eux en un premier point commun 43.

En complément, le dispositif de limitation 22 comporte au moins un deuxième élément passif 44, le ou chaque deuxième élément passif 44 étant connecté entre le transformateur 36 et une borne d'entrée 18 correspondante.

Dans l'exemple de réalisation de la figure 1, la tension d'entrée et une tension triphasée, le système d'alimentation 16 comporte trois bornes d'entrée 18, et le dispositif de limitation 24 comporte alors trois deuxièmes éléments passifs 44. Les trois deuxièmes éléments passifs 44 sont, d'une part, connectés à une borne d'entrée 18 correspondante, et d'autre part, reliés entre eux en un deuxième point commun 45.

Le redresseur de tension 26 est connu en soi, et comporte, par exemple, des interrupteurs électroniques commandables, non représentés, propres à convertir la tension alternative d'entrée en une tension continue délivrée au bus continu 30.

Dans l'exemple de réalisation de la figure 1, le redresseur 26 est un redresseur commandé, également appelé AFE (de l'anglais *Active Front End*). Le redresseur 26 présente, par exemple, une topologie du type clampée par le neutre, également appelée topologie NPC (de l'anglais *Neutral Point Clamped*). En variante, le redresseur 26 présente une topologie du type pilotée par le neutre, également appelée topologie NPP (de l'anglais *Neutral Point Piloted*).

L'onduleur de tension 28 est connu en soi, et comporte par exemple, des interrupteurs électroniques commandables, non représentés, propres à convertir la tension continue issue du bus continu 30 en la tension alternative de sortie.

L'onduleur 28 présente, par exemple, une topologie du type clampée par le neutre, également appelée topologie NPC. En variante, l'onduleur 28 présente une topologie du type pilotée par le neutre, également appelée topologie NPP.

Le bus continu 30 comporte un conducteur positif 46 et conducteur négatif 48 de circulation du courant continu entre le redresseur 26 et l'onduleur 28. Le bus continu 30 comporte deux condensateurs 50 connectés en série entre le conducteur positif 46 et le conducteur négatif 48, les condensateurs 50 étant reliés entre eux par un point milieu 52.

Le filtre sinus d'entrée 32 est connu en soi, et comporte, par exemple, trois bobines électromagnétiques d'entrée 54, chacune étant connectée entre une borne d'entrée 18 respective et le redresseur 26, ainsi que trois condensateurs d'entrée 56 et trois résistances d'entrée 58, chaque condenseur d'entrée 56 étant connecté en série avec une résistance d'entrée 58 entre une borne d'entrée respective 18 et la masse électrique 17.

Le filtre de sortie 34 comporte trois bobines électromagnétiques de sortie 62, chacune étant connectée entre la sortie de l'onduleur 28 et une borne de sortie 20 respective, ainsi que trois résistances de sortie 64 et trois condensateurs de sortie 66, chaque résistance de sortie 64 étant connectée en série avec un condensateur de sortie 66 correspondant, entre une borne de sortie 20 respective et le point milieu 52 reliant les deux condensateurs 50 du bus continu.

Le transformateur 36 présente un rapport de transformation K entre la deuxième bobine électromagnétique 40 et la première bobine électromagnétique 36.

La première bobine électromagnétique 38 est connectée entre les bornes de sortie 20 et la masse électrique 17. Dans l'exemple de réalisation de la figure 1, la première bobine électromagnétique 38 est connectée entre le premier point commun 43 et la masse électrique 17.

La première bobine électromagnétique 38 est propre à être parcourue par un premier courant I1 et présente une première tension V1 à ses extrémités.

La deuxième bobine électromagnétique 40 est connectée entre les bornes d'entrée 18 et la masse électrique 17. Dans l'exemple de réalisation de la figure 1, la deuxième électromagnétique 40 est connectée entre le deuxième point commun 45 et la masse électrique 17.

La deuxième bobine électromagnétique 40 est propre à être parcourue par un deuxième courant 12 et présente une deuxième tension V2 à ses extrémités.

La première bobine 38 et la deuxième bobine 40 présente un même sens d'enroulement entre les bornes 18, 20 respectives et la masse électrique 17, comme représenté sur la figure 1.

Chaque premier élément passif 42 présente une première impédance Z1 et chaque deuxième élément passif 44 présente une deuxième impédance Z2. Les première et deuxième impédances Z1, Z2 vérifient de préférence l'équation suivante :

$$Z1 + K^2 \times Z2 = (K-1) \times Z_L \qquad (1)$$

où Z1 et Z2 représentent respectivement les première et deuxième impédances,

K représente le rapport de transformation, et

$Z_L$ représente l'impédance de la charge 14 vis-à-vis de la masse électrique 17, la charge 14 correspondant, par exemple, à la machine électrique ainsi qu'aux câbles connectés entre les bornes de sortie 20 et la masse électrique 17.

Le rapport de transformation K est défini de telle sorte que les premier et deuxième courants I1, I2 vérifient l'équation suivante :

$$I2 = K \times I1 \qquad (2)$$

Autrement dit, le rapport de transformation K est défini de telle sorte que les première et deuxième tensions V1, V2 vérifient l'équation suivante :

$$V1 = K \times V2 \qquad (3)$$

L'équation (1) est obtenue en imposant que le courant homopolaire injecté dans le réseau 12 soit sensiblement nul, le but du dispositif de limitation du courant homopolaire 24 étant de supprimer le courant homopolaire. Autrement dit, le deuxième courant I2 propre à circuler à travers la deuxième bobine électromagnétique 40 en direction des bornes d'entrée 18 est sensiblement égal à la somme du premier courant I1 propre à circuler dans la première bobine électromagnétique 38 depuis les bornes de sortie 20 et du courant homopolaire propre à circuler dans l'impédance $Z_L$.

Le rapport de transformation K du transformateur 36 vérifie de préférence l'égalité suivante :

$$K = 1 + \sqrt{2} \, , \qquad (4)$$

afin de maximiser les valeurs des première et deuxième impédances Z1, Z2.

La valeur de la première impédance Z1 est, par exemple, égale à la valeur de la deuxième impédance Z2. Les valeurs des première et deuxième impédances Z1, Z2 sont alors de préférence définies à l'aide de l'égalité suivante :

$$Z1 = Z2 = \frac{1}{2 \times (1 + \sqrt{2})} \times Z_L. \qquad (5)$$

Dans l'exemple de réalisation de la figure 1, chaque premier élément passif 42 est un condensateur, et chaque deuxième élément passif 44 est également un condensateur.

Chaque premier condensateur 42 présente une première capacité C1 et chaque deuxième condensateur 44 présente une deuxième capacité C2. Les première et deuxième capacités C1, C2 vérifient de préférence l'équation suivante :

$$\frac{1}{C1} + \frac{K^2}{C2} = (K-1) \times \frac{1}{C_L} \qquad (6)$$

où C1 et C2 représentent respectivement les première et deuxième capacités,

K représente le rapport de transformation, et

$C_L$ représente la capacité de la charge 14 vis-à-vis de la masse électrique 17, la charge 14 correspondant, par exemple, à la machine électrique ainsi qu'aux câbles connectés entre les bornes de sortie 20 et la masse électrique 17.

L'équation (6) est obtenue, de manière analogue, en imposant que le courant homopolaire injecté dans le réseau 12 soit sensiblement nul. Autrement dit, le deuxième courant I2 propre à circuler à travers la deuxième bobine électromagnétique 40 en direction des bornes d'entrée 18 est sensiblement égal à la somme du premier courant I1 propre à circuler dans la première bobine électromagnétique 38 depuis les bornes de sortie 20 et du courant homopolaire propre à circuler dans la capacité $C_L$.

De manière analogue, le rapport de transformation K du transformateur 36 vérifie, de préférence, l'égalité de l'équation (2), afin de minimiser les valeurs des première et deuxième capacités C1, C2.

La valeur de la première capacité C1 est, par exemple, égale à la valeur de la deuxième capacité C2. Les valeurs des première et deuxième capacités C1, C2 sont alors de préférence définies à l'aide de l'égalité suivante :

$$C1 = C2 = 2 \times (1 + \sqrt{2}) \times C_L. \qquad (7)$$

Dans le cas où le transformateur 36 présente une inductance de fuite $L_{fuite}$ de valeur non négligeable, alors cette inductance de fuite $L_{fuite}$ sera comprise dans la première ou la deuxième impédance Z1, Z2. Le cas échéant, la charge 14 comprendra une bobine électromagnétique de manière à ce que l'impédance de charge $Z_L$ vérifie toujours l'équation (1).

Lors du fonctionnement du système d'alimentation 16 selon l'invention, le dispositif de limitation du courant homopolaire 24 limite fortement le courant homopolaire, voire l'élimine, en réinjectant le deuxième courant I2 au niveau des bornes d'entrée 18 s'opposant au courant homopolaire susceptible de circuler entre le réseau 12 et la charge 14.

Autrement dit, le transformateur 36 connecté entre les bornes de sortie 20 et les bornes d'entrée 18 en parallèle du convertisseur 22 forme une boucle de rebouclage du courant destiné à compenser le courant homopolaire susceptible de circuler à travers le convertisseur 22 entre le réseau 12 et la charge 14.

Le dispositif de limitation 24 vise ainsi à réduire, voire à supprimer, le courant homopolaire susceptible d'être réinjecté sur le réseau 12 depuis la charge 14.

On conçoit ainsi que le système d'alimentation 16 selon l'invention permet de limiter davantage le courant homopolaire propre à circuler entre le réseau et la charge.

L'homme du métier observera que le dispositif de limitation 24 s'applique, sans modification particulière et de manière analogue, au cas où le convertisseur 22 est un convertisseur alternatif-continu, ou bien un convertisseur continu-alternatif, ou encore un convertisseur continu -continu. Le nombre de premiers éléments passifs 42 est égal au nombre de bornes de sortie 20, le ou chaque premier élément passif 42 étant relié à une borne de sortie 20 correspondante. Le nombre de deuxièmes éléments passifs 44 est égal au nombre de bornes d'entrée 18, le ou chaque deuxième élément passif 44 étant relié à une borne d'entrée 18 correspondante.

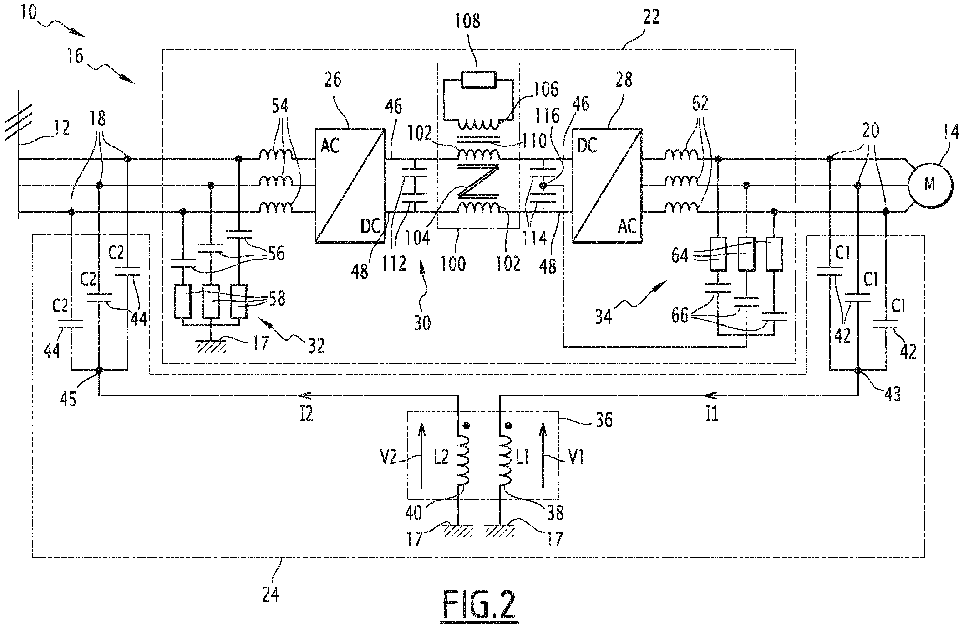

La figure 2 illustre un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, le convertisseur 22 comporte en outre un organe 100 de limitation du courant de mode commun propre à circuler entre le réseau 12 et la charge 14, l'organe de limitation du courant de mode commun 100, étant disposé entre le redresseur de tension 26 et l'onduleur de tension 28.

L'organe de limitation 100 comporte un enroulement électromagnétique primaire 102 pour chacune des deux polarités du courant continu propre à circuler entre le redresseur 26 et l'onduleur 28, et un noyau 104 de couplage magnétique des deux enroulements primaires 102.

L'organe de limitation 100 comporte également un enroulement secondaire 106 connecté en série avec une résistance 108, également appelée résistance d'amortissement, et un deuxième noyau magnétique 110 de couplage de l'enroulement secondaire 106 avec les enroulements primaires 102.

En variante, l'organe de limitation 100 comporte un seul noyau magnétique de couplage des deux enroulements primaires et de l'enroulement secondaire.

En variante, la résistance d'amortissement 108 est connectée directement en parallèle de l'enroulement électromagnétique primaire 102. En variante encore, la résistance d'amortissement 108 est formée par la résistance équivalente aux pertes fer du noyau.

Le bus continu 30 comporte des premiers condensateurs d'équilibrage 112 agencés entre le redresseur de tension 26 et l'organe de limitation 100, et connectés en série entre le conducteur positif 46 et le conducteur négatif 48.

Le bus continu 30 comporte des deuxièmes condensateurs d'équilibrage 114 agencés entre l'organe de limitation 100 et l'onduleur 28, les deuxièmes condensateurs d'équilibrage 114 étant connectés en série entre le conducteur positif 46 et le conducteur négatif 48 et reliés entre eux par un point milieu 116. Le point milieu 116 est connecté au filtre de sortie 34.

Le fonctionnement de ce deuxième mode de réalisation est identique à celui du premier mode de réalisation en ce qui concerne le dispositif de limitation du courant homopolaire 24, et n'est pas décrit à nouveau.

L'organe de limitation du courant de mode commun 100 permet en outre de réduire le courant de mode commun propre à circuler à travers le convertisseur 22 entre le réseau 12 et la charge 14.

Les autres avantages de ce deuxième mode de réalisation sont identiques à ceux du premier mode de réalisation, et ne sont pas décrits à nouveau.

On conçoit ainsi que le système d'alimentation 16 selon l'invention permet de limiter davantage le courant homopolaire propre à être injecté dans le réseau.

## Revendications

1. Système (16) d'alimentation électrique d'une charge (14), le système d'alimentation (16) étant propre à délivrer une tension de sortie à la charge (14), à partir d'une tension d'entrée issue d'un réseau électrique (12), le système d'alimentation (16) comprenant :

   - au moins deux bornes d'entrée (18) et au moins deux bornes de sortie (20), les bornes d'entrée (18) étant destinées à être connectées au réseau électrique (12) et les bornes de sortie (20) étant destinées à être connectées à la charge (14),
   - un convertisseur (22) propre à convertir la tension d'entrée en la tension de sortie, le convertisseur (22) étant connecté entre les bornes d'entrée (18) et les bornes de sortie (20),
   - un dispositif (24) de limitation du courant homopolaire propre à circuler entre le réseau (12) et la charge (14),

   **caractérisé en ce que** le dispositif de limitation du courant homopolaire (24) comporte un transformateur (36) connecté en parallèle du convertisseur (22), entre les bornes d'entrée (18) et les bornes de sortie (20), le transformateur (36) comportant une première (38) et une deuxième (40) bobines électromagnétiques et formant une boucle de rebouclage entre les bornes de sortie (20) et les bornes d'entrée (18) pour un courant destiné à compenser ledit courant homopolaire.

2. Système (16) selon la revendication 1, dans lequel la première bobine électromagnétique (38) est connectée entre les bornes de sortie (20) et une masse électrique (17), et la deuxième bobine électromagnétique (40) est connectée entre les bornes d'entrée (18) et la masse électrique (17), la première (18) et la deuxième (40) bobines présentant un même sens d'enroulement entre les bornes (18, 20) respectives et la masse électrique (17).

3. Système (16) selon la revendication 1 ou 2, dans lequel le dispositif de limitation (24) comporte en outre au moins un premier élément passif (42), le ou chaque premier élément passif (42) étant connecté entre le transformateur (36) et une borne de sortie correspondante (20).

4. Système (16) selon l'une quelconque des revendications précédentes, dans lequel le dispositif de limitation (24) comporte en outre au moins un deuxième élément passif (44), le ou chaque deuxième élément passif (44) étant connecté entre le transformateur (36) et une borne d'entrée correspondante (18).

5. Système (16) selon l'une quelconque des revendications précédentes, dans lequel le réseau électrique (12) est un réseau alternatif, et le convertisseur (22) est destiné à être relié au réseau alternatif (12) sans présence d'un transformateur entre le réseau alternatif (12) et ledit convertisseur (22).

6. Système (16) selon l'une quelconque des revendications précédentes, dans lequel le convertisseur (22) est un convertisseur alternatif-alternatif destiné à être relié à un réseau alternatif (12), le convertisseur alternatif-alternatif (22) étant propre à convertir une tension alternative d'entrée, issue du réseau alternatif (12), en une tension alternative de sortie.

7. Système (16) selon la revendication 6, dans lequel le convertisseur alternatif-alternatif (22) comporte un redresseur de tension (26) propre à être connecté au réseau alternatif (12) et un onduleur de tension (28) connecté en sortie du redresseur de tension (26).

8. Chaîne d'entraînement (10) propre à être reliée à un réseau électrique (12), la chaîne d'entraînement (10) comprenant une charge (14), telle qu'une machine électrique, et un système (16) d'alimentation de la charge (14), **caractérisée en ce que** le système d'alimentation (16) est conforme à l'une quelconque des revendications précédentes.

9. Chaîne d'entraînement (10) selon la revendication 8, dans laquelle le système d'alimentation (16) est conforme aux revendications 3 et 4 prises ensemble, et dans lequel le transformateur (36) présente un rapport de transformation (K) entre la deuxième bobine électromagnétique (40) et la première bobine électromagnétique (38), le ou chaque premier élément passif (42) présente une première impédance (Z1), le ou chaque deuxième élément passif (44) présente une deuxième impédance (Z2), et les première et deuxième impédances (Z1, Z2) vérifient l'équation suivante :

$$Z1 + K^2 \times Z2 = (K-1) \times Z_L$$

où Z1 et Z2 représentent respectivement les première et deuxième impédances,
K représente le rapport de transformation, et
$Z_L$ représente l'impédance de la charge (14) vis-à-vis d'une masse électrique (17).

10. Chaîne d'entraînement (10) selon la revendication 9, dans laquelle le rapport de transformation (K) du transformateur (36) vérifie l'égalité suivante :

$$K = 1 + \sqrt{2}\,.$$

11. Chaîne d'entraînement (10) selon la revendication 9 ou 10, dans laquelle la valeur de la première impédance (Z1) est égale à la valeur de la deuxième impédance (Z2), la valeur des première et deuxième impédances (Z1, Z2) étant de préférence définie à l'aide de l'égalité suivante :

$$Z1 = Z2 = \frac{1}{2 \times (1 + \sqrt{2})} \times Z_L\,.$$

**Patentansprüche**

1. System (16) zur elektrischen Versorgung einer Last (14), wobei das Versorgungssystem (16) dazu eingerichtet ist, eine Ausgangsspannung an die Last (14) abzugeben, nachdem eine Eingangsspannung von einem elektrischen Netz abgegeben wird, wobei das Versorgungssystem (16) aufweist:

- wenigstens zwei Eingangsanschlüsse (18) und wenigstens zwei Ausgangsanschlüsse (20), wobei die Eingangsanschlüsse (18) dazu bestimmt sind, mit dem elektrischen Netz (12) verbunden zu werden und die Ausgangsanschlüsse (20) dazu bestimmt sind, mit der Last (14) verbunden zu werden,
- ein Wandler (22), der dazu eingerichtet ist, die Eingangsspannung in die Ausgangsspannung zu wandeln, wobei der Wandler (22) zwischen die Eingangsanschlüsse (18) und die Ausgangsanschlüsse (20) geschaltet ist,
- eine Begrenzungseinrichtung (24) für einen homopolaren Strom, der dazu eingerichtet ist, zwischen dem Netz (12) und der Last (14) zu zirkulieren,

**dadurch gekennzeichnet, dass** die Begrenzungseinrichtung für den homopolaren Strom (24) einen Transformator (36) aufweist, der parallel zum Wandler (22) zwischen die Eingangsanschlüsse (18) und die Ausgangsanschlüsse (20) geschaltet ist, wobei der Transformator (36) eine erste (38) und eine zweite (40) elektromagnetische Spule aufweist und eine Rückkopplungsschleife zwischen den Ausgangsanschlüssen (20) und den Eingangsanschlüssen (18) für einen Strom bildet, der dazu bestimmt ist, den homopolaren Strom zu kompensieren.

2. System (16) nach Anspruch 1, bei dem die erste elektromagnetische Spule (38) zwischen die Ausgangsanschlüsse (20) und einer elektrischen Masse (17) geschaltet ist und die zweite elektromagnetische Spule (40) zwischen die Eingangsanschlüsse (18) und der elektrischen Masse (17) geschaltet ist, wobei die erste (18) und die zweite (40) Spule denselben Wicklungssinn zwischen den jeweiligen Anschlüssen (18, 20) und der elektrischen Masse (17) aufweisen.

**3.** System (16) nach Anspruch 1 oder 2, bei dem die Begrenzungseinrichtung (24) außerdem mindestens ein erstes passives Element (42) aufweist, wobei das oder jedes erste passive Element (42) zwischen dem Transformator (36) und einem entsprechenden Ausgangsanschluss (20) geschaltet ist.

**4.** System (16) nach irgendeinem der vorhergehenden Ansprüche, bei dem die Begrenzungseinrichtung (24) außerdem wenigstens ein zweites passives Element (44) aufweist, wobei das oder jedes zweite passive Element (44) zwischen den Transformator (36) und einen entsprechenden Eingangsanschluss (18) geschaltet ist.

**5.** System (16) nach irgendeinem der vorhergehenden Ansprüche, bei dem das elektrische Netz (12) ein Wechselspannungsnetz ist und der Wandler (22) dazu bestimmt ist, mit dem Wechselspannungsnetz (12) verbunden zu sein, ohne das Vorhandensein eines Transformators zwischen dem Wechselspannungsnetz (12) und dem Wandler (22).

**6.** System (16) nach irgendeinem der vorhergehenden Ansprüche, bei dem der Wandler (22) ein Wechselspannungsumrichter (22) ist, der ausgebildet ist, eine Eingangswechselspannung, die durch das Wechselspannungsnetz (12) bereitgestellt wird, in eine Ausgangswechselspannung zu wandeln.

**7.** System (16) nach Anspruch 6, bei dem der Wechselspannungsumrichter (22) einen Spannungsgleichrichter (26), der eingerichtet ist, mit dem Wechselspannungsnetz (12) verbunden zu werden, und einen Wechselrichter (28), der eingerichtet ist, mit dem Ausgang des Spannungsgleichrichters (26) verbunden zu werden, aufweist.

**8.** Antriebsstrang (10), der dazu eingerichtet ist, mit einem elektrischen Netz (12) verbunden zu werden, wobei der Antriebsstrang (10) eine Last (14), wie etwa eine elektrische Maschine, und ein System (16) zur Versorgung der Last (14) aufweist, **dadurch gekennzeichnet, dass** das Versorgungssystem (16) irgendeinem der vorhergehenden Ansprüche entspricht.

**9.** Antriebsstrang (10) nach Anspruch 8, bei dem das Versorgungssystem (16) den Ansprüchen 3 und 4 in Kombination entspricht und bei dem der Transformator (36) eine Transformationsbeziehung (K) zwischen der zweiten elektromagnetischen Spule (40) und der ersten elektromagnetischen Spule (38) aufweist, wobei das oder jedes erste passive Element (42) eine erste Impedanz (Z1) aufweist, wobei das oder jedes zweite passive Element (44) eine zweite Impedanz (Z2) aufweist und die erste und die zweite Impedanz (Z1, Z2) die folgende Gleichung erfüllen:

$$Z1 + K^2 \times Z2 = (K - 1) \times Z_L \ ,$$

wobei Z1 und Z2 jeweils die erste und die zweite Impedanz darstellen,
K die Transformationsbeziehung darstellt und
$Z_L$ die Impedanz der Last (14) gegenüber einer elektrischen Masse (17) darstellt.

**10.** Antriebsstrang (10) nach Anspruch 9, bei dem die Transformationsbeziehung (K) des Transformators (36) die folgende Gleichung erfüllt:

$$K = 1 + \sqrt{2} \ .$$

**11.** Antriebsstrang (10) nach Anspruch 9 oder 10, bei dem der Wert der ersten Impedanz (Z1) gleich ist wie der Wert der zweiten Impedanz (Z2), wobei der Wert der ersten und zweiten Impedanz (Z1, Z2) vorzugsweise mit Hilfe der folgenden Gleichung definiert ist:

$$Z1 = \ Z2 = \frac{1}{2 \times (1 + \sqrt{2})} \times Z_L .$$

**Claims**

**1.** System (16) for electrically powering a load (14), the system (16) being able to supply an output voltage to the load (14) from an input voltage taken from an electrical network (12), the supply system (16) comprising:

- at least two input terminals (18) and at least two output terminals (20), the input terminals (18) being intended to be connected to the electrical network (12) and the output terminals (20) being intended to be connected to the load (14),
- a converter (22) able to convert an input voltage into an output voltage, the converter (22) being connected between the input terminals (18) and the output terminals (20),
- a device (24) for limiting a homopolar current able to flow between the network (12) and the load (14),

**characterised in that** the homopolar current limiting device (24) comprises a transformer (36) connected in parallel to the converter (22) between the input terminals (18) and the output terminals (20), the transformer (36) comprising a first (38) and a second electromagnetic coil (40) and forming a loopback loop between the output terminals (20) and the input terminals (18) for a current intended to compensate for said homopolar current.

2. Supply system (16) according to claim 1, wherein the first electromagnetic coil (38) is connected between the output terminals (20) and an electrical ground (17), and the second electromagnetic coil (40) is connected between the input terminals (18) and the electrical ground (17), the first (18) and the second (40) coils having a same winding direction between the respective terminals (18, 20) and the electrical ground (17).

3. Supply system (16) according to claim 1 or 2, wherein the limiting device (24) also comprises at least one first passive element (42), the or each first passive element (42) being connected between the transformer (36) and a corresponding output terminal (20).

4. Supply system (16) according to any of the preceding claims, wherein the limiting device (24) also comprises at least one second passive element (44), the or each second passive element (44) being connected between the transformer (36) and a corresponding input terminal (18).

5. Supply system (16) according to any of the preceding claims, wherein the electrical network (12) is an alternating current network, and the converter (22) is intended to be connected to the alternating current network (12) without the presence of a transformer between the alternating current network (12) and said converter (22).

6. Supply system (16) according to any of the preceding claims, wherein the converter (22) is an AC-AC converter intended to be connected to an alternating current network (12), the AC-AC converter (22) being able to convert an AC input voltage from the alternating current network (12) into an AC output voltage.

7. Supply system (16) according to claim 6, wherein the AC-AC converter (22) comprises a voltage rectifier (26) able to be connected to the AC network (12) and a voltage inverter (28) connected at the output from the voltage rectifier (26).

8. Drive chain (10) able to be connected to an electrical network (12), the drive chain (10) comprising a load (14) such as an electrical machine, and a system (16) for powering the load (14), **characterised in that** the supply system (16) is in accordance with any of the preceding claims.

9. Drive chain (10) according to claim 8, wherein the supply system (16) is in accordance with claims 3 and 4 taken together, and wherein the transformer (36) has a transformation ratio (K) between the second electromagnetic coil (40) and the first electromagnetic coil (38), the or each first passive element (42) has a first impedance (Z1), the or each second passive element (44) has a second impedance (Z2), and the first and second impedances (Z1, Z2) verify the following equation:

$$Z1 + K^2 \; x \; Z2 = (K - 1) \; x \; Z_L$$

where Z1 and Z2 represent the first and second impedances respectively,
K represents the transformation ratio, and
$Z_L$ represents the impedance of the load (14) relative to an electrical ground (17).

10. Drive chain (10) according to claim 9, wherein the transformation ratio (K) of the transformer (36) verifies the following

equation:

$$K = 1 + \sqrt{2}.$$

**11.** Drive chain (10) according to claim 9 or 10, wherein the value of the first impedance (Z1) is equal to the value of the second impedance (Z2), the value of the first and second impedances (Z1, Z2) being preferably defined using the following equation:

$$Z1 = Z2 = \frac{1}{2 \; x \; (1 + \sqrt{2})} \; x \; Z_L.$$

FIG.1

**FIG.2**

**EP 2 677 645 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2963509 A1
- CN 102447403